# EUROPEAN PATENT SPECIFICATION

(11) **EP 4 277 306 B1**
(45) Date of publication and mention of the grant of the patent: **02.09.2026**
(21) Application number: 22736615.0
(22) Date of filing: 10.01.2022
(51) Int. Cl.: H04W 4/06, H04W 36/00

(54) **DATA TRANSMISSION METHOD AND APPARATUS AND NETWORK SIDE DEVICE**
DATENÜBERTRAGUNGSVERFAHREN UND -VORRICHTUNG SOWIE NETZWERKSEITIGE VORRICHTUNG
PROCÉDÉ ET APPAREIL DE TRANSMISSION DE DONNÉES ET DISPOSITIF CÔTÉ RÉSEAU

(30) Priority: 11.01.2021 CN 202110033339; 19.03.2021 CN 202110296646
(43) Date of publication of application: 15.11.2023
(73) Proprietor: Vivo Mobile Communication Co., Ltd., Dongguan, Guangdong 523863 (CN)
(72) Inventor: ZHONG, Tingting, Dongguan, Guangdong 523863 (CN); XIE, Zhenhua, Dongguan, Guangdong 523863 (CN)
(74) Representative: Conti, Marco
(86) International application number: PCT/CN2022/070947
(87) International publication number: WO 2022/148454

(56) References cited:
- EP-A2- 1 521 492
- CN-A- 104 247 470
- CN-A- 109 392 092
- CN-A- 111 935 807
- US-A1- 2014 029 580
- US-A1- 2016 219 475

## Description

### TECHNICAL FIELD

This application pertains to the field of wireless communications technologies and specifically relates to a data transmission method and apparatus and a network-side device.

### BACKGROUND

In a wireless communication system, a problem of poor service continuity may occur when user equipment (User Equipment, UE) moves and camps on a cell that does not provide a certain service (such as multicast/broadcast service (Multicast/Broadcast Service, MBS)).

For MBS services with high quality of service (Quality of Service, QoS) in new radio (New Radio, NR), the UE needs to receive the MBS service in a connected state. When corresponding data of the MBS service is temporarily unavailable, corresponding N3 and radio access network (Radio Access Network, RAN) resources may be suspended, releasing the UE to a non-RRC connected (non-RRCConnected) state. Considering that when the terminal is in a non-RRC connected state, it may trigger a cell reselection and move to a traditional base station (that is, a non-enhanced base station without a multicast control channel (Multicast Control Channel, MCCH) notification mechanism), when the data of the MBS service arrives and resumes, the UE does not know that the MBS service has resumed and, therefore, cannot initiate a radio resource control (Radio Resource Control, RRC) connection to enter the RRC connected state to receive the data.

EP1521492A2 discloses a mobile communication system for providing a number of User Equipment (UEs) positioned in a plurality of cells with Multimedia Broadcast/Multicast Service (MBMS) using CDMA technology. A Radio Network Controller (RNC) transmits a MBMS availability message to each of the plurality of cells under management regarding at least one MBMS which is available in a corresponding cell in order to support the mobility of the UE which receives the MBMS. The UE decides whether it can receive a desired MBMS in the current cell, after receiving the MBMS availability message, and requests the desired MBMS or reselects an other cell. The continuity of MBMS reception is improved while UEs using the MBMS are moving and the overhead of RRC connection setup for unnecessary MBMS request is reduced.

US 2014/0029580 A1 discloses a handover device and method for service continuity in an MBMS. Disclosed is a terminal comprising: a transmission unit for transmitting to the terminal and a linked source base station, an MBMS service indicator including information indicating whether an MBMS service is being received, and information on the type of the MBMS service; and a reception unit for receiving from the source base station, an MBMS service response indicator for indicating that the MBMS service is transmitted from a target base station forming a new link with the terminal through a handover, and receiving the MBMS service from the target base station.

### SUMMARY

The present application provides methods, a network-side device, a storage medium and a computer-program product as defined by the appended independent claims 1, 6, 12, 13 and 14, respectively. Embodiments of this application provide a data transmission method and apparatus, and a network-side device, so as to resolve the problem of poor service continuity that may occur when a terminal camps on a cell that does not provide a certain service.

According to a first aspect, a data transmission method is provided, which is executed by a first network node. The method includes sending first data to a second network node, where the first data is at least one of the following: a first paging indication, a broadcast indication, and a group paging indication.

According to a second aspect, a data transmission method is provided, which is executed by a second network node. The method includes receiving first data sent by a first network node, where the first data is at least one of the following: a first paging indication, a broadcast indication, and a group paging indication.

According to a third aspect, a data transmission apparatus is provided. The apparatus includes a sending module configured to send first data to a second network node, where the first data is at least one of the following: a first paging indication, a broadcast indication, and a group paging indication.

According to a fourth aspect, a data transmission apparatus is provided. The apparatus includes a receiving module configured to receive first data sent by a first network node, where the first data is at least one of the following: a first paging indication, a broadcast indication, and a group paging indication.

According to a fifth aspect, a network-side device is provided, where the network-side device includes a processor, a memory, and a program or instructions stored in the memory and capable of running on the processor, and when the program or instructions are executed by the processor, the steps of the method according to the first aspect are implemented.

According to a sixth aspect, a readable storage medium is provided, where a program or instructions are stored in the readable storage medium, and when the program or instructions are executed by a processor, the steps of the method according to the first aspect are implemented, or the steps of the method according to the second aspect are implemented.

According to a seventh aspect, a chip is provided, where the chip includes a processor and a communications interface, the communications interface is coupled to the processor, and the processor is configured to run a program or instructions of a network-side device to implement the method according to the first aspect or the method according to the second aspect.

According to an eighth aspect, a computer program product is provided, where the computer program product is stored in a memory, and when the computer program product is executed by a processor, the steps of the method according to the first aspect are implemented, or the method according to the second aspect are implemented.

In the embodiments of this application, a first network node sends first data to a second network node, where the first data is at least one of a first paging indication, a broadcast indication, and a group paging indication. Thus, the problem of poor continuity of services when a terminal camps on a cell that does not provide a certain service can be solved.

### BRIEF DESCRIPTION OF DRAWINGS

FIG. 1 is a schematic diagram of a structure of a wireless communications system according to an exemplary embodiment of this application;
FIG. 2 is a schematic flowchart of a data transmission method according to an exemplary embodiment of this application;
FIG. 3 is a schematic flowchart of a data transmission method according to another exemplary embodiment of this application;
FIG. 4 is a schematic flowchart of a data transmission method according to another exemplary embodiment of this application;
FIG. 5 is a schematic flowchart of a data transmission method according to another exemplary embodiment of this application;
FIG. 6 is a schematic block diagram of a data transmission apparatus according to an exemplary embodiment of this application;
FIG. 7a is a schematic block diagram of a data transmission apparatus according to another exemplary embodiment of this application;
FIG. 7b is a schematic block diagram of a data transmission apparatus according to another exemplary embodiment of this application; and
FIG. 8 is a schematic block diagram of a network-side device according to another exemplary embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, in this specification and claims, "and/or" indicates at least one of the connected objects, and the character "/" generally indicates an "or" relationship between the contextually associated objects.

It is worth noting that the technologies described in the embodiments of this application are not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, the new radio (New Radio, NR) system is described for an illustration purpose, and NR terms are used in most of the following descriptions, although these technologies may also be used in applications other than the NR system, for example, the 6th generation (6th Generation, 6G) communication system.

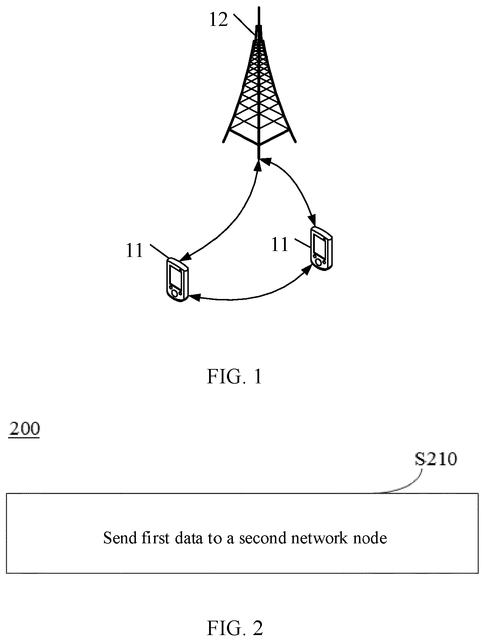

FIG. 1 is a schematic diagram of a wireless communications system to which an embodiment of this application may be applied. The wireless communication system includes a terminal 11 and a network-side device 12. The terminal 11 may also be referred to as a terminal device or user equipment. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), a wearable device (Wearable Device), vehicular user equipment (VUE), or pedestrian user equipment (PUE). The wearable device includes a wrist band, earphones, glasses, and the like. It should be noted that the terminal 11 is not limited to any particular type in the embodiments of this application. The network-side device 12 may be a base station or a core network (Core Network, CN), where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP) or other appropriate terms in the art. Provided that the same technical effects are achieved, the base station is not limited to any particular technical terms. It should be noted that in the embodiments of this application, only the base station in the NR system is used as an example, but the base station is not limited in type.

The specific embodiments and application scenarios of the technical solution provided in the embodiments of this application are described in detail below with reference to the accompanying drawings. It should be noted that the data transmission method provided in the embodiments of this application can be applied to, without limitation, multimedia broadcast and multicast service (Multimedia Broadcast and Multicast Service, MBMS) or MBS service, and this may be determined specifically according to actual communication needs. For the purpose of description, the subsequent parts will introduce the data transmission method provided in the embodiments in terms of MBMS service or MBS service.

As shown in FIG. 2, a schematic flowchart of a data transmission method 200 provided in an exemplary embodiment in this application is illustrated. The method 200 can be executed by a first network node, for example, by software and/or hardware installed in the first network node. The method 200 includes at least the following step.

S210. Send first data to a second network node.

The first data sent by the first network node to the second network node may be at least one of the following (1) to (3).
(1) First paging indication, used to indicate that the second network node sends a second paging indication to a terminal. In this embodiment, the first paging indication may be a RAN paging message (paging message), such as a RAN paging message on XN interface or a CN paging message on NG interface, or unicast paging message (for non-supporting nodes).
(2) Broadcast indication, used to notify the second network node to send a broadcast message to the terminal. In this embodiment, the broadcast message may be a system message related to MBS service and/or a signaling message sent on a control channel (such as MCCH) related to MBS service.
(3) Group paging indication, where, in this embodiment, taking NR MBS as an example, the group paging indication may be used to indicate an MBS service identifier, such as temporary mobile group identity (Temporary Mobile Group Identity, TMGI) or MBS session identifier, or use PCCH for multicast activation notification (for MBS supporting nodes), but not to indicate the terminal identifier.

In this embodiment, the first network node can cause the second network node to send second data to a terminal by sending first data to the second network node, thereby notifying the terminal to initiate RRC connection to enter RRC connected state for data reception or to continue to receive data in non-RRC connected state, thus ensuring continuity of data services.

In a case that the first data includes a first paging indication and a broadcast indication, the process of sending the first data may be as follows.

In one implementation, the first network node can separately send the first paging indication and the broadcast indication via two messages. For example, the first network node may send the message corresponding to the first paging indication first, and then send the message corresponding to the broadcast indication; or the first network node may send the message corresponding to the broadcast indication first, and then send the message corresponding to the first paging indication.

In another implementation, the first network node may send the paging indication and the broadcast indication simultaneously via one message. For example, the first network node may add the broadcast indication to the first paging indication to enhance the first paging indication before sending the first paging indication, or define a new message and include the first paging indication and the broadcast indication in the message before sending the message.

Correspondingly, depending on how the first data is sent by the first network node, the second network node may receive the first paging indication and the broadcast indication separately via two messages, or receive the paging indication and the broadcast indication simultaneously via one message.

It should be understood that when the first data is the first paging indication and group paging indication, or when the first data is the broadcast indication, first paging indication, and group paging indication, or when the first data is the group paging indication, reference can be made to the above description for the sending method of the first network node for sending the first data, such as being sent separately through multiple messages or sent through one message, without limitation herein.

In this embodiment of this application, the first network node sends the first data to the second network node, where the first data is at least one of the first paging indication, broadcast indication, and group paging indication. Thus, it can solve the problem of poor service continuity that may occur when a terminal camps on a cell that does not provide a certain service.

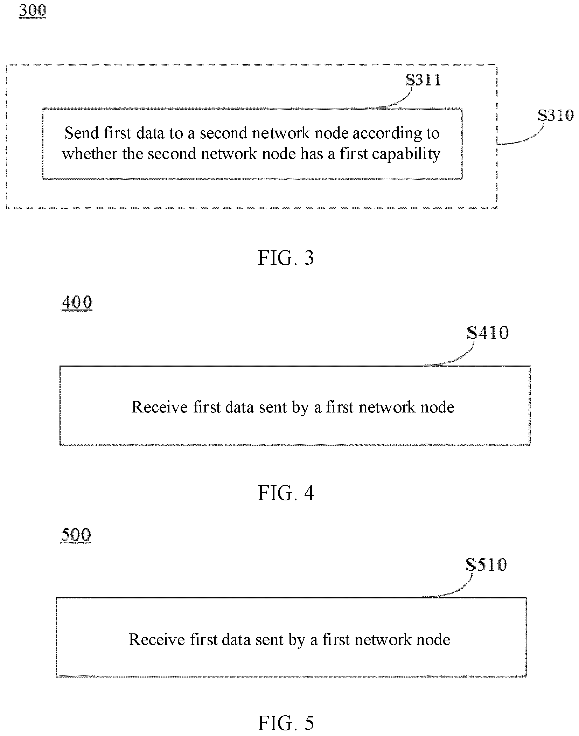

As shown in FIG. 3, a schematic flowchart of a data transmission method 300 provided by an exemplary embodiment of this application is illustrated. The method 300 can be performed by a first network node, for example, by software and/or hardware installed in the first network node. The method 300 includes at least the following step.

S310. Send first data to a second network node.

The implementation process of S310 may refer to the relevant description in the method 200. As a possible implementation, the first network node may include a first base station and/or a core network function. The core network function may include but is not limited to at least one an access and mobility management function (Access and Mobility Management Function, AMF), session management function (Session Management Function, SMF), MB-SMF, user plane function (User Plane Function, UPF), and MB-UPF.

The second network node is at least one of the following (1) to (11).
(1) Second base station located within an RNA. The RNA can be understood as a RAN-based notification area (RAN-based Notification Area). In this embodiment, RNA may be determined based on the terminal identifier, without limitation. For example, in the case of the first data being a group paging indication, the first network node obtains a terminal identifier of a terminal from the first data and determines, based on the terminal identifier, to send a group paging indication in an RNA of the terminal.
(2) Second base station located within a registration area (Registration Area, RA). In this embodiment, the registration area may be determined based on the terminal identifier, without limitation. For example, in the case of the first data being a group paging indication, the first network node obtains the terminal identifier of the terminal from the first data and determines, based on the terminal identifier, to send a group paging indication in an RA of the terminal.
(3) Second base station located within a service area. The service area can be a service area of MBS service or the like, and is not limited in this embodiment.
(4) Base station in a tracking area (Tracking area, TA) determined based on the terminal identifier. For example, the first network node obtains the terminal identifier of the terminal from the first data and determines, based on the terminal identifier, to send a group paging indication in a tracking area of the terminal.
(5) Base station of a previous serving cell determined based on the terminal identifier. For example, in the case of the first data being a group paging indication, the first network node obtains the identifier of UE from the first data and determines, based on the terminal identifier, to send a group paging indication to a base station of the previous serving cell of the terminal. The previous serving cell can be understood as an NG-RAN node that provides service for the terminal when the terminal performs uplink or downlink release.
(6) Base station of a neighboring cell of the previous serving cell determined based on the terminal identifier. For example, in the case of the first data being a group paging indication, the first network node obtains the terminal identifier and determines, based on the terminal identifier, to send a group paging indication to the base station of the neighboring cell of the previous serving cell of the terminal.
(7) Neighbor base station of the base station of the previous serving cell determined based on the terminal identifier. For example, in the case of the first data being a group paging indication, the first network node obtains the terminal identifier and determines, based on the terminal identifier, to send a group paging indication to the neighbor base station of the base station of the previous serving cell of the terminal.
(8) Base station of a recommended cell determined based on the terminal identifier. For example, in the case of the first data being a group paging indication, the NG-RAN node may provide to the AMF a list of recommended cells and NG-RAN nodes (a list of recommended cells and NG-RAN nodes) as assistance information for subsequent paging messages when the terminal performs uplink or downlink release.
(9) Base station determined based on the terminal identifier. For example, when the UE performs uplink or downlink release, the NG-RAN node may provide to the AMF a list of recommended cells and NG-RAN nodes as assistance information for subsequent paging messages. This means the base station determined based on the UE identifier is the NG-RAN nodes in parentheses.
(10) Base station of a cell corresponding to radio access network paging area information determined based on the terminal identifier. For example, in the case of the first data being a group paging indication, the first network node obtains the terminal identifier and determines, based on the terminal identifier, to send a group paging indication to the base stations of cells in a RAN area identifier (ID) in the radio access network paging area (RAN Paging Area) of the terminal.
(11) Base station corresponding to a RAN area identifier in a RAN paging area determined based on the terminal identifier. For example, in the case of the first data being a group paging indication, the first network node obtains the terminal identifier and determines, based on the terminal identifier, to send a group paging indication to the base station corresponding to a RAN area ID in the RAN paging area of the terminal.

Further, refer to FIG. 3 again. The implementation process of S310 can be as shown in S311.

S311. Send the first data to the second network node according to whether the second network node supports a first capability.

The first capability can be understood as at least one of whether or not the second network node is an enhanced base station, has MBMS (or MBS) capability, or is able to transmit MBMS (or MBS) data through shared delivery (shared delivery) in the core network portion. In a case that the second network node supports the first capability, the second network node is a supporting node, such as an MBS supporting node. In a case that the second network node does not support the first capability, the second network node is a non-supporting node, such as an MBS non-supporting node. Based on this, the sending the first data to the second network node according to whether the second network node supports a first capability as mentioned in S311 above can include either one of the following (1) and (2).
(1) Send a broadcast indication to the second network node in a case that the second network node supports the first capability, where the broadcast indication is used to notify the second network node to send a broadcast message.
   For example, the second network node having the first capability can be considered as at least one of being an enhanced base station, having MBMS (or MBS) capability, or being able to transmit MBMS (or MBS) data through shared delivery in the core network portion. Under this circumstance, the first network node sends a broadcast indication to the second network node to notify the second network node to send a broadcast message to the terminal, thereby causing the terminal to initiate an RRC connection to enter an RRC connected state to receive data or to continue to receive data in a non-RRC connected state, thus ensuring continuity of data services.
(2) Send a first paging indication to the second network node in a case that the second network node does not support the first capability.

For example, the second network node not having the first capability can be considered as being a traditional base station, or being unable to transmit MBMS (or MBS) data through shared delivery in the core network portion but able to transmit MBMS or MBS data separately through a protocol data unit session (Protocol Data Unit session, PDU session) or through individual delivery (individual delivery) in the core network portion. Under this circumstance, the first network node sends a first paging indication to the second network node to indicate that the second network node sends a second paging indication to the terminal, causing the terminal to initiate an RRC connection to enter an RRC connected state to receive data or to continue to receive data in a non-RRC connected state, thus ensuring continuity of data services.

It should be noted that in the various implementations described above, the first data may include at least one of the following.
(1) Terminal identifier, where the terminal identifier may be the identifier of a terminal that needs to receive the first data.
(2) Service identifier, where the service identifier may be the identifier of MBS service, such as TMGI, or the identifier of MBMS service, or MBS session identifier.
(3) Session identifier (session identifier), where the session identifier may be the identifier of an MBS session.

Furthermore, in this embodiment, the second network node, after receiving the first data sent by the first network node, can determine whether or not to send second data to a terminal according to its own possession of a first capability and/or the first data. The implementation process is illustrated below with different examples.

### Example 1

If the second network node, according to its own first capability, sends or does not send the second data to the terminal, then the implementation process can include at least one of the following (1) to (4).
(1) The second network node may not send the second data to the terminal in a case that the second network node does not support the first capability and the first data is a broadcast indication.
(2) The second network node sends the second data to the terminal in a case that the second network node does not support the first capability and the first data is a first paging indication.
(3) The second network node sends the second data to the terminal in a case that the second network node supports the first capability and the first data is a broadcast indication.
(4) The second network node sends the second data to the terminal in a case that the second network node supports the first capability and the first data is a first paging indication.

### Example 2

If the second network node sends second data to the terminal based on the received first data, the implementation process can include at least one of the following (1) to (3):
(1) Send the second data to the terminal based on the first paging indication in the first data.
(2) Send the second data to the terminal based on the broadcast indication in the first data.
(3) Send the second data to the terminal based on the first received first data. For example, if the second network node receives the first data sent by the first network node multiple times, the second network node only sends the second data to the terminal based on the first received first data or the first data received at the first time.

In the aforementioned Example 1 and Example 2, the second data may be obtained by filtering, merging or other processing based on first paging indication(s) and/or broadcast indication(s) included in at least one piece of first data received by the second network node, or may be generated based on at least one of the first paging indication, broadcast indication, or group paging indication included in the at least one piece of first data received, and sent to the terminal. This is not limited herein.

In this case, the second data may include a second paging indication and/or a broadcast message, where the second paging indication and the broadcast message are used to notify the terminal to initiate an RRC connection to enter the RRC connected state to receive data or continue to receive data in a non-RRC connected state, thereby ensuring continuity of data services.

For example, in a case that the second network node is a non-enhanced base station (such as a traditional base station), a second paging indication is sent to notify the terminal; and in a case that the second network node is an enhanced base station, a broadcast message is sent to notify the terminal.

In one implementation, the broadcast message can include at least one of the following (1) to (3):
(1) Scheduling information, such as scheduling information for MBS data.
(2) Service information, such as service information for MBS or MBMS.
(3) State information, such as state information of session start (start), resumption, activation (active), suspension (suspend), deactivation (deactive), stop (stop), and deletion (delete) notifications for MBS service.

Furthermore, as a possible implementation, the implementation process of the data transmission method provided in this embodiment may be different depending on the different broadcast indications included in the first data. For example, if the broadcast indication includes a first broadcast indication and/or a second broadcast indication, where the first broadcast indication is used to indicate that the second network node broadcasts service information or state information, and the second broadcast indication is used to indicate that the second network node broadcasts scheduling information, then in this case, the second network node, in response to receiving first and second broadcast indications, may perform a first operation and a second operation. The first operation includes broadcasting service information and/or state information through air interface.

The second operation may include at least (1) or (2).
(1) The second network node broadcasts scheduling information through air interface in a case that an interest indication is received.
(2) The second network node sends a failure indication to the first network node in a case that no interest indication is received. Accordingly, the first network node may send the broadcast indication to a third network node in a case that a failure indication sent by the second network node is received.

It should be noted that the "interest indication" mentioned in the aforementioned (1) and (2) can be understood as follows: after the terminal receives the scheduling information broadcast by the second network node, it can determine whether it is interested in the scheduling information, and if interested, the terminal sends an interest indication to the second network node, and otherwise, sends no interest indication to the second network node. In addition, reference may be made to the relevant description of the second network node for a description of the third network node, and details are not provided herein again. In this embodiment, the first network node sends the first data to the second network node based on the capability of the second network node, which can provide better service continuity.

As shown in FIG. 4, a schematic flowchart of a data transmission method 400 provided in an exemplary embodiment in this application is illustrated. The method 400 can be applied to a second network node, for example, it can be executed by software and/or hardware installed in the second network node. The method 400 includes at least the following step.

S410. Receive first data sent by a first network node, where the first data includes at least one of the following (1) to (3).
(1) First paging indication.
(2) Broadcast indication.
(3) Group paging indication.

For implementation of S410, reference may be made to the relevant description of methods 200 and/or 300. To avoid repetition, details are not described herein again.

In this embodiment, the second network node receives the first data sent by the first network node, where the first data includes at least one of the first paging indication, broadcast indication, and group paging indication, solving the problem of poor service continuity when a terminal camps on a cell that does not provide a certain service.

As shown in FIG. 5, a schematic flowchart of a data transmission method 500 provided in an exemplary embodiment of this application is illustrated. The method 500 can be applied to a second network node, for example, executed by software and/or hardware installed in the second network node. The method 500 includes at least the following step.

S510. Receive first data sent by a first network node.

The first network node may include a first base station and/or a core network function.

The second network node is at least one of the following (1) to (11).
(1) Second base station located within an RNA. In this embodiment, the RNA may be determined based on the terminal identifier, without limitation. For example, in the case of the first data being a group paging indication, the first network node obtains the terminal identifier of a terminal from the first data and determines, based on the terminal identifier, to send a group paging indication in an RNA of the terminal.
(2) Second base station located within an RA. In this embodiment, the registration area may be determined based on the terminal identifier, without limitation. For example, in the case of the first data being a group paging indication, the first network node obtains the terminal identifier of the terminal from the first data and determines, based on the terminal identifier, to send a group paging indication in an RA of the terminal.
(3) Second base station located within a service area.
(4) Base station in a tracking area (Tracking area, TA) determined based on the terminal identifier. For example, the first network node obtains the terminal identifier of the terminal from the first data and determines, based on the terminal identifier, to send a group paging indication in a tracking area of the terminal.
(5) Base station of a previous serving cell determined based on the terminal identifier. For example, For example, in the case of the first data being a group paging indication, the first network node obtains the identifier of UE from the first data and determines, based on the terminal identifier, to send a group paging indication to a base station of the previous serving cell of the terminal.
(6) Base station of a neighboring cell of the previous serving cell determined based on the terminal identifier. For example, in the case of the first data being a group paging indication, the first network node obtains the terminal identifier and determines, based on the terminal identifier, to send a group paging indication to the base station of the neighboring cell of the previous serving cell of the terminal.
(7) Neighbor base station of the base station of the previous serving cell determined based on the terminal identifier. For example, in the case of the first data being a group paging indication, the first network node obtains the terminal identifier and determines, based on the terminal identifier, to send a group paging indication to the neighbor base station of the base station of the previous serving cell of the terminal.
(8) Base station of a recommended cell determined based on the terminal identifier. For example, in the case of the first data being a group paging indication, the NG-RAN node may provide to the AMF a list of recommended cells and NG-RAN nodes as assistance information for subsequent paging (paging) when the terminal performs uplink or downlink release.
(9) Base station determined based on the terminal identifier. For example, when the UE performs uplink or downlink release, the NG-RAN node may provide to the AMF a list of recommended cells and NG-RAN nodes as assistance information for subsequent paging. This means the base station determined based on the UE identifier is the NG-RAN nodes in parentheses.
(10) Base station of a cell corresponding to radio access network paging area information determined based on the terminal identifier. For example, in the case of the first data being a group paging indication, the first network node obtains the terminal identifier and determines, based on the terminal identifier, to send a group paging indication to the base stations of cells in a RAN area identifier (ID) in the RAN paging area of the terminal.
(11) Base station corresponding to a RAN area identifier in a RAN paging area determined based on the terminal identifier. For example, in the case of the first data being a group paging indication, the first network node obtains the terminal identifier and determines, based on the terminal identifier, to send a group paging indication to the base station corresponding to a RAN area ID in the RAN paging area of the terminal.

In one possible implementation, after receiving the first data, the second network node may or may not send second data to a terminal. The implementation process is illustrated below with Examples 1 and 2.

### Example 1

The second network node may send or not send the second data to the terminal according to its first capability, as detailed in (1) to (4) below.
(1) Not send the second data to the terminal in a case that the second network node does not support the first capability and the first data is a broadcast indication.
(2) Send the second data to the terminal in a case that the second network node does not support the first capability and the first data is a first paging indication.
(3) Send the second data to the terminal in a case that the second network node supports the first capability and the first data is a broadcast indication.
(4) Send the second data to the terminal in a case that the second network node supports the first capability and the first data is a first paging indication.

### Example 2

The second network node may send second data to the terminal based on the received first data, as detailed below in (1) to (3).
(1) Send the second data to the terminal based on the first paging indication in the first data.
(2) Send the second data to the terminal based on the broadcast indication in the first data.
(3) Send the second data to the terminal based on the first received first data.

In the aforementioned Examples 1 and 2, the second data may at least include one of the following (1) to (3).
(1) Scheduling information.
(2) Service information.
(3) State information.

In another possible implementation, the broadcast indication includes at least one of the following (1) to (2).
(1) First broadcast indication, used to indicate that the second network node broadcasts service information or state information.
(2) Second broadcast indication, used to indicate that the second network node broadcasts scheduling information.

Correspondingly, in a case that the broadcast indication includes the first broadcast indication and the second broadcast indication, the method further includes performing a first operation and a second operation.

The first operation includes broadcasting service information and/or state information through air interface.

The second operation includes the following (1) and/or (2).
(1) Broadcast scheduling information through air interface in a case that an interest indication is received.
(2) Send a failure indication to the first network node in a case that no interest indication is received.

In this embodiment, after receiving the first data, the second network node may send or not send the second data to the terminal according to its own capability or the first data, thereby providing better service continuity.

It should be noted that in the various implementations provided in this embodiment, reference can be made to the relevant descriptions of method 200, 300 or 400 for the implementation process. To avoid repetition, details are not described herein again.

It should be noted that the data transmission method provided in this embodiment of this application may be performed by a data transmission apparatus, or by a control module for performing the data transmission method in the data transmission apparatus. In embodiments of this application, the data transmission method being performed by a data transmission apparatus is used as an example to describe the data transmission apparatus provided by the embodiments of this application.

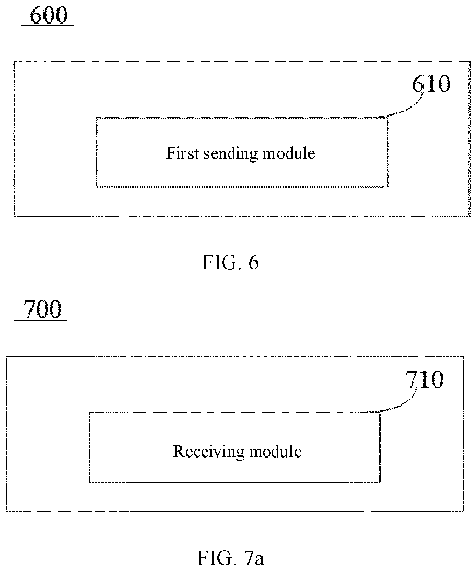

As shown in FIG. 6, a schematic block diagram of a data transmission apparatus 600 provided by an exemplary embodiment of this application is illustrated. The apparatus 600 includes: a first sending module 610 configured to send first data to a second network node, where the first data is at least one of the following: a first paging indication, a broadcast indication, or a group paging indication.

In one possible implementation, the first sending module 610 is configured to send the first data to the second network node according to whether the second network node supports a first capability.

In another possible implementation, the first sending module 610 is configured to perform at least one of the following: sending a broadcast indication to the second network node in a case that the second network node supports the first capability, where the broadcast indication is used to notify the second network node to send a broadcast message; and sending a first paging indication to the second network node in a case that the second network node does not support the first capability.

In another possible embodiment, the first data packet includes at least one of the following: a terminal identifier, a service identifier, and a session identifier.

In another possible implementation, the first network node is at least one of the following: a first base station and a core network function.

In another possible embodiment, the second network node is at least one of the following: a second base station located within a radio access network-based notification area RNA, a second base station located within a registration area RA, a second base station located within a service area, a base station in a tracking area determined based on a terminal identifier, a base station of a previous serving cell determined based on the terminal identifier, a base station of a neighboring cell of the previous serving cell determined based on the terminal identifier, a neighbor base station of the base station of the previous serving cell determined based on the terminal identifier, a base station of a recommended cell determined based on the terminal identifier, a base station determined based on the terminal identifier, a base station of a cell corresponding to radio access network paging area information determined based on the terminal identifier, and a base station corresponding to a RAN area identifier in a radio access network paging area determined based on the terminal identifier.

In another possible implementation, the radio access network-based notification area and/or the registration area are determined based on the terminal identifier.

In another possible implementation, the broadcast indication includes at least one of the following: a first broadcast indication, used to indicate that the second network node broadcasts service information or state information, and a second broadcast indication, used to indicate that the second network node broadcasts scheduling information.

In another possible implementation, when the broadcast indication includes the second broadcast indication, the first sending module 610 is further configured to send the broadcast indication to a third network node in a case that a failure indication sent by the second network node is received.

As shown in FIG. 7a, a schematic block diagram of a data transmission apparatus 700 provided as an exemplary embodiment in this application is provided. The apparatus 700 includes a receiving module 710 configured to receive first data sent by a first network node, where the first data includes at least one of the following: a first paging indication, a broadcast indication, and a group paging indication.

In another possible embodiment, the first data packet includes at least one of the following: a terminal identifier, a service identifier, and a session identifier.

In another possible implementation, the broadcast indication includes at least one of the following: a first broadcast indication, used to indicate that the second network node broadcasts service information or state information, and a second broadcast indication, used to indicate that the second network node broadcasts scheduling information.

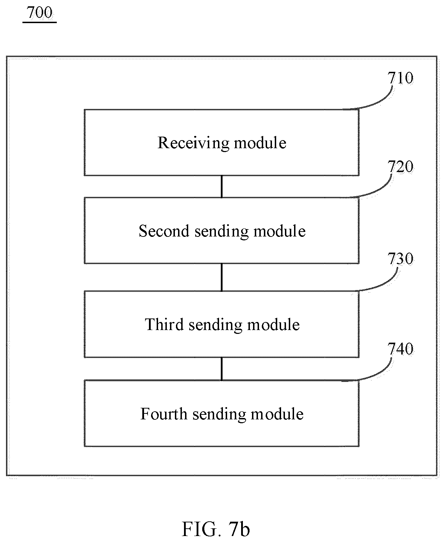

In another possible implementation, as shown in FIG. 7b, in a case that the broadcast indication includes the first broadcast indication and the second broadcast indication, the apparatus 700 may further include: a second sending module 720 configured to perform a first operation and a second operation, where the first operation includes broadcasting the service information and/or state information through air interface; and the second operation includes at least one of the following: broadcasting scheduling information through air interface in a case that an interest indication is received; and sending a failure indication to the first network node in a case that no interest indication is received.

In another possible implementation, referring again to FIG. 7b, the apparatus 700 further includes a third sending module 730, where the third sending module 730 is configured to perform at least one of the following: skipping sending second data to a terminal in a case that the second network node does not support a first capability and the first data is a broadcast indication; sending the second data to the terminal in a case that the second network node does not support the first capability and the first data is a first paging indication; sending the second data to the terminal in a case that the second network node supports the first capability and the first data is a broadcast indication; and sending the second data to the terminal in a case that the second network node supports the first capability and the first data is a first paging indication.

In another possible embodiment, referring again to FIG. 7b, the apparatus 700 further includes a fourth sending module 740, and the fourth sending module 740 is configured to send second data to a terminal through air interface based on the first data.

In another possible implementation, the fourth sending module 740 is configured to perform at least one of the following: sending the second data to the terminal based on the first paging indication in the first data; sending the second data to the terminal based on the broadcast indication in the first data; and sending the second data to the terminal based on the first received first data.

In another possible implementation, the second data is at least one of the following: a second paging indication and a broadcast message.

In another possible embodiment, the broadcast message includes at least one of the following: scheduling information, service information, and state information.

In another possible implementation, the first network node is at least one of the following: a first base station and a core network function.

In another possible embodiment, the second network node is at least one of the following: a second base station located within a radio access network-based notification area RNA, a second base station located within a registration area RA, a second base station located within a service area, a base station in a tracking area determined based on a terminal identifier, a base station of a previous serving cell determined based on the terminal identifier, a base station of a neighboring cell of the previous serving cell determined based on the terminal identifier, a neighbor base station of the base station of the previous serving cell determined based on the terminal identifier, a base station of a recommended cell determined based on the terminal identifier, a base station determined based on the terminal identifier, a base station of a cell corresponding to radio access network paging area information determined based on the terminal identifier, and a base station corresponding to a RAN area identifier in a radio access network paging area determined based on the terminal identifier.

In another possible implementation, the radio access network-based notification area and/or the registration area are determined based on the terminal identifier.

The data transmission apparatus 600 or 700 in embodiments of this application may be an apparatus, or may be a component, integrated circuit, or chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (television, TV), a teller machine, a self-service machine or the like, which are not specifically limited in the embodiments of this application.

The data transmission apparatus 600 or 700 in embodiments of this application may be an apparatus with an operating system. The operating system may be an android (Android) operating system, an iOS operating system, or other possible operating systems. This is not specifically limited in the embodiments of this application.

The data transmission apparatus 600 or 700 in embodiments of this application can implement the processes that are implemented in the method embodiments of FIG. 2 to FIG. 5, with the same technical effects achieved. To avoid repetition, details are not described herein again.

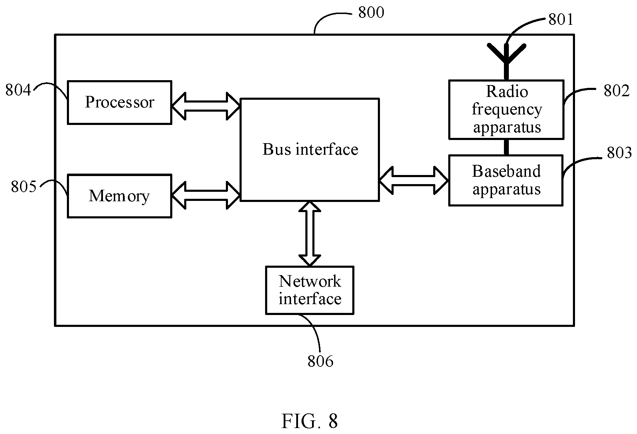

As shown in FIG. 8, embodiments of this application also provide a network-side device. As shown in FIG. 8, the network device 800 includes an antenna 801, a radio frequency apparatus 802, and a baseband apparatus 803. The antenna 801 is connected to the radio frequency apparatus 802. In the uplink direction, the radio frequency apparatus 802 receives information through the antenna 801, and sends the received information to the baseband apparatus 803 for processing. In the downlink direction, the baseband apparatus 803 processes information to be transmitted and sends it to the radio frequency apparatus 802, which processes the received information and sends it out through the antenna 801.

The band processing apparatus may be located within the baseband apparatus 803. The method performed by the network-side device in the foregoing embodiment may be implemented in the baseband apparatus 803, and the baseband apparatus 803 includes a processor 804 and a memory 805.

The baseband apparatus 803 may include, for example, at least one baseband processing unit, where a plurality of chips are disposed on the baseband processing unit. As shown in FIG. 8, one of the chips is, for example, the processor 804, connected to the memory 805, to invoke a program in the memory 805 to perform the operations of the network device shown in the foregoing method embodiment.

The baseband apparatus 803 may further include a network interface 806, configured to exchange information with the radio frequency apparatus 802, where the interface is, for example, a common public radio interface (Common Public Radio Interface, CPRI).

Specifically, the network-side device in this embodiment of the present invention further includes instructions or a program stored in the memory 805 and capable of running on the processor 804. The processor 804 invokes the instructions or program in the memory 805 to perform the method performed by the modules shown in FIG. 6, FIG. 7a, and FIG. 7b with the same technical effects achieved. To avoid repetition, details are not described herein again.

An embodiment of the present invention further provides a readable storage medium, where the readable storage medium stores a program or instructions. When the program or instructions are executed by a processor, the processes of the foregoing data transmission method embodiment can be implemented, with same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions of a network-side device to implement the processes of the foregoing data transmission method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product. The computer program product is stored in a memory and when the computer program product is executed by a processor, the processes of the foregoing data transmission method embodiments are implemented, with the same technical effects achieved. To avoid repetition, details are not described herein.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

From the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A data transmission method executed by a first network node, **characterized by** comprising:
sending (S311) first data to a second network node according to whether the second network node supports a first capability; wherein
the first data comprises at least one of the following:
a first paging indication;
a broadcast indication; and
a group paging indication;
wherein the first network node is at least one of the following:
a first base station; and
a core network function;
when the second network node meets at least one of the following, it is determined that the second network node supports the first capability:
the second network node is an enhanced base station;
the second network node has Multimedia Broadcast and Multicast Service, MBMS, or Multicast/Broadcast Service, MBS, capability
the second network node supports transmitting MBMS or MBS data through shared delivery in the core network portion;
wherein when the second network node meets at least one of the following, it is determined that the second network node does not support the first capability:
the second network node is a traditional base station;
the second network node does not support transmitting MBMS or MBS data through shared delivery in the core network portion, but supports transmitting MBMS or MBS data separately through a protocol data unit, PDU, session or through individual delivery in the core network portion;
wherein the sending (S311) the first data to the second network node according to whether the second network node supports a first capability comprises at least one of the following:
sending a broadcast indication to the second network node in a case that the second network node supports the first capability, wherein the broadcast indication is used to notify the second network node to send a broadcast message; and
sending a first paging indication to the second network node in a case that the second network node does not support the first capability.

2. The method according to claim 1, wherein the first data comprises at least one of the following:
a terminal identifier;
a service identifier; and
a session identifier; and/or,
wherein the first network node is at least one of the following:
a first base station; and
a core network function.

3. The method according to claim 1, wherein the second network node is at least one of the following:
a second base station located within a radio access network-based notification area RNA;
a second base station located within a registration area, RA;
a second base station located within a service area;
a base station in a tracking area determined based on a terminal identifier;
a base station of a previous serving cell determined based on the terminal identifier;
a base station of a neighboring cell of the previous serving cell determined based on the terminal identifier;
a neighbor base station of the base station of the previous serving cell determined based on the terminal identifier;
a base station of a recommended cell determined based on the terminal identifier;
a base station determined based on the terminal identifier;
a base station of a cell corresponding to radio access network paging area information determined based on the terminal identifier; and
a base station corresponding to a RAN area identifier in a radio access network paging area determined based on the terminal identifier.

4. The method according to claim 3, wherein the radio access network-based notification area and/or the registration area are determined based on the terminal identifier.

5. The method according to claim 1, wherein the broadcast indication comprises at least one of the following:
a first broadcast indication, used to indicate that the second network node broadcasts service information or state information; and
a second broadcast indication, used to indicate that the second network node broadcasts scheduling information;
wherein in a case that the broadcast indication comprises the second broadcast indication, the method further comprises:
sending the broadcast indication to a third network node in a case that a failure indication sent by the second network node is received.

6. A data transmission method executed by a second network node, **characterized in that** the method comprising:
receiving (S410, S510) first data sent by a first network node; wherein
the first data comprises at least one of the following:
a first paging indication;
a broadcast indication; and
a group paging indication;
wherein the first network node is at least one of the following:
a first base station; and
a core network function;
after the receiving first data sent by a first network node, the method further comprises at least one of the following:
skipping sending second data to a terminal in a case that the second network node does not support a first capability and the first data is a broadcast indication;
sending the second data to the terminal in a case that the second network node does not support the first capability and the first data is a first paging indication;
sending the second data to the terminal in a case that the second network node supports the first capability and the first data is a broadcast indication;
wherein when the second network node meets at least one of the following, it is determined that the second network node supports the first capability:
the second network node is an enhanced base station;
the second network node has Multimedia Broadcast and Multicast Service, MBMS, or Multicast/Broadcast Service, MBS, capability
the second network node supports transmitting MBMS or MBS data through shared delivery in the core network portion;
wherein when the second network node meets at least one of the following, it is determined that the second network node does not support the first capability:
the second network node is a traditional base station;
the second network node does not support transmitting MBMS or MBS data through shared delivery in the core network portion, but supports transmitting MBMS or MBS data separately through a protocol data unit, PDU, session or through individual delivery in the core network portion.

7. The method according to claim 6, wherein the broadcast indication comprises at least one of the following:
a first broadcast indication, used to indicate that the second network node broadcasts service information or state information; and
a second broadcast indication, used to indicate that the second network node broadcasts scheduling information.

8. The method according to claim 7, wherein in a case that the broadcast indication comprises the first broadcast indication and the second broadcast indication, the method further comprises:
performing a first operation and a second operation; wherein
the first operation comprises broadcasting the service information and/or state information through air interface; and
the second operation comprises at least one of the following:
broadcasting the scheduling information through air interface in a case that an interest indication is received; and
sending a failure indication to the first network node in a case that no interest indication is received.

9. The method according to claim 6, wherein the first data comprises at least one of the following:
a terminal identifier;
a service identifier; and
a session identifier.

10. The method according to claim 6, wherein after the receiving first data sent by a first network node, the method further comprises:
sending second data based on the first data through air interface;
wherein the sending second data to a terminal based on the first data through air interface comprises at least one of the following:
sending the second data to the terminal based on the first paging indication in the first data;
sending the second data to the terminal based on the broadcast indication in the first data; and
sending the second data to the terminal based on the first received first data; and/or,
wherein the second data comprises at least one of the following:
a second paging indication; and
a broadcast message;
wherein the broadcast message comprises at least one of the following:
scheduling information;
service information; and
state information; and/or,
wherein the first network node is at least one of the following:
a first base station; and
a core network function.

11. The method according to any one of claims 6 to 10, wherein the second network node is at least one of the following:
a second base station located within a radio access network-based notification area RNA;
a second base station located within a registration area, RA;
a second base station located within a service area;
a base station in a tracking area determined based on a terminal identifier;
a base station of a previous serving cell determined based on the terminal identifier;
a base station of a neighboring cell of the previous serving cell determined based on the terminal identifier;
a neighbor base station of the base station of the previous serving cell determined based on the terminal identifier;
a base station of a recommended cell determined based on the terminal identifier;
a base station determined based on the terminal identifier;
a base station of a cell corresponding to radio access network paging area information determined based on the terminal identifier; and
a base station corresponding to a RAN area identifier in a radio access network paging area determined based on the terminal identifier;
wherein the radio access network-based notification area and/or the registration area are determined based on the terminal identifier.

12. A network-side device (800), comprising a processor (804), a memory (805), and a program or instructions stored in the memory (805) and capable of running on the processor (804), **characterized in that** when the program or instructions are executed by the processor (804), the steps of the data transmission method according to any one of claims 1 to 11 are implemented.

13. A readable storage medium, wherein the readable storage medium stores a program or instructions, **characterized in that** when the program or instructions are executed by a processor, the steps of the data transmission method according to any one of claims 1 to 11 are implemented.

14. A computer program product, wherein the computer program product is stored in a memory, **characterized in that** when the computer program product is executed by a processor, the steps of the data transmission method according to any one of claims 1 to 11 are implemented.

## Patentansprüche

1. Datenübertragungsverfahren, das von einem ersten Netzwerkknoten ausgeführt wird, **dadurch gekennzeichnet, dass** es Folgendes umfasst:
Senden (S311) erster Daten an einen zweiten Netzwerkknoten je nachdem, ob der zweite Netzwerkknoten eine erste Fähigkeit unterstützt; wobei
die ersten Daten mindestens eine der Folgenden umfassen:
eine erste Funkrufanzeige;
eine Rundfunkanzeige; und
eine Gruppen-Funkrufanzeige;
wobei der erste Netzwerkknoten mindestens eine der Folgenden ist:
eine erste Basisstation; und
eine Kernnetzwerkfunktion;
wenn der zweite Netzwerkknoten mindestens eines der Folgenden erfüllt, wird bestimmt, dass der zweite Netzwerkknoten die erste Fähigkeit unterstützt:
der zweite Netzwerkknoten ist eine verbesserte Basisstation;
der zweite Netzwerkknoten weist eine Multimedia Broadcast und Multicast Service-, MBMS-, oder Multicast/Broadcast Service-, MBS-, Fähigkeit auf;
der zweite Netzwerkknoten unterstützt die Übertragung von MBMS- oder MBS-Daten durch gemeinsame Zustellung im Kernnetzwerkabschnitt;
wobei, wenn der zweite Netzwerkknoten mindestens eines der Folgenden erfüllt, bestimmt wird, dass der zweite Netzwerkknoten die erste Fähigkeit nicht unterstützt:
der zweite Netzwerkknoten ist eine herkömmliche Basisstation;
der zweite Netzwerkknoten unterstützt nicht die Übertragung von MBMS- oder MBS-Daten durch gemeinsame Zustellung im Kernnetzwerkabschnitt, sondern unterstützt die Übertragung von MBMS- oder MBS-Daten separat durch eine Protokolldateneinheits-, PDU-, Sitzung oder durch individuelle Zustellung im Kernnetzwerkabschnitt;
wobei das Senden (S311) der ersten Daten an den zweiten Netzwerkknoten je nachdem, ob der zweite Netzwerkknoten eine erste Fähigkeit unterstützt, mindestens eines der Folgenden umfasst:
Senden einer Rundfunkanzeige an den zweiten Netzwerkknoten in einem Fall, dass der zweite Netzwerkknoten die erste Fähigkeit unterstützt, wobei die Rundfunkanzeige verwendet wird, um den zweiten Netzwerkknoten zu benachrichtigen, eine Rundfunknachricht zu senden; und
Senden einer ersten Funkrufanzeige an den zweiten Netzwerkknoten in einem Fall, dass der zweite Netzwerkknoten die erste Fähigkeit nicht unterstützt.

2. Verfahren nach Anspruch 1, wobei die ersten Daten mindestens eine der Folgenden umfassen:
eine Endgerätekennung;
eine Dienstkennung; und
eine Sitzungskennung; und/oder
wobei der erste Netzwerkknoten mindestens eine der Folgenden ist:
eine erste Basisstation; und
eine Kernnetzwerkfunktion.

3. Verfahren nach Anspruch 1, wobei der zweite Netzwerkknoten mindestens eine der Folgenden ist:
eine zweite Basisstation, die sich innerhalb eines Funkzugangsnetzwerk-basierten
Benachrichtigungsbereichs, RNA, befindet;
eine zweite Basisstation, die sich innerhalb eines Registrierungsbereichs, RA, befindet;
eine zweite Basisstation, die sich innerhalb eines Dienstbereichs befindet;
eine Basisstation in einem Verfolgungsbereich, die auf Grundlage einer Endgerätekennung bestimmt wird;
eine Basisstation einer vorherigen bedienenden Zelle, die auf Grundlage der Endgerätekennung bestimmt wird;
eine Basisstation einer benachbarten Zelle der vorherigen bedienenden Zelle, die auf Grundlage der Endgerätekennung bestimmt wird;
eine Nachbarbasisstation der Basisstation der vorherigen bedienenden Zelle, die auf Grundlage der Endgerätekennung bestimmt wird;
eine Basisstation einer empfohlenen Zelle, die auf Grundlage der Endgerätekennung bestimmt wird;
eine Basisstation, die auf Grundlage der Endgerätekennung bestimmt wird;
eine Basisstation einer Zelle, die Funkzugangsnetzwerk-Funkrufbereichsinformationen entspricht und die auf Grundlage der Endgerätekennung bestimmt wird; und
eine Basisstation, die einer RAN-Bereichkennung in einem Funkzugangsnetzwerk-Funkrufbereich entspricht, die auf Grundlage der Endgerätekennung bestimmt wird.

4. Verfahren nach Anspruch 3, wobei der Funkzugangsnetzwerk-basierte Benachrichtigungsbereich und/oder der Registrierungsbereich auf Grundlage der Endgerätekennung bestimmt werden.

5. Verfahren nach Anspruch 1, wobei die Rundfunkanzeige mindestens eine der Folgenden umfasst:
eine erste Rundfunkanzeige, die verwendet wird, um anzuzeigen, dass der zweite Netzwerkknoten Dienstinformationen oder Zustandsinformationen ausstrahlt; und
eine zweite Rundfunkanzeige, die verwendet wird, um anzuzeigen, dass der zweite Netzwerkknoten Planungsinformationen ausstrahlt;
wobei in einem Fall, dass die Rundfunkanzeige die zweite Rundfunkanzeige umfasst, das Verfahren ferner Folgendes umfasst:
Senden der Rundfunkanzeige an einen dritten Netzwerkknoten in einem Fall, dass eine von dem zweiten Netzwerkknoten gesendete Fehleranzeige empfangen wird.

6. Datenübertragungsverfahren, das von einem zweiten Netzwerkknoten ausgeführt wird, **dadurch gekennzeichnet, dass** das Verfahren Folgendes umfasst:
Empfangen (S410, S510) erster Daten, die von einem ersten Netzwerkknoten gesendet werden; wobei
die ersten Daten mindestens eine der Folgenden umfassen:
eine erste Funkrufanzeige;
eine Rundfunkanzeige; und
eine Gruppen-Funkrufanzeige;
wobei der erste Netzwerkknoten mindestens eine der Folgenden ist:
eine erste Basisstation; und
eine Kernnetzwerkfunktion;
nach dem Empfangen erster Daten, die von einem ersten Netzwerkknoten gesendet werden, umfasst das Verfahren ferner mindestens eines der Folgenden:
Überspringen des Sendens zweiter Daten an ein Endgerät in einem Fall, dass der zweite Netzwerkknoten eine erste Fähigkeit nicht unterstützt und die ersten Daten eine Rundfunkanzeige sind;
Senden der zweiten Daten an das Endgerät in einem Fall, dass der zweite Netzwerkknoten die erste Fähigkeit nicht unterstützt und die ersten Daten eine erste Funkrufanzeige sind;
Senden der zweiten Daten an das Endgerät in einem Fall, dass der zweite Netzwerkknoten die erste Fähigkeit unterstützt und die ersten Daten eine Rundfunkanzeige sind;
wobei, wenn der zweite Netzwerkknoten mindestens eines der Folgenden erfüllt, wird bestimmt, dass der zweite Netzwerkknoten die erste Fähigkeit unterstützt:
der zweite Netzwerkknoten ist eine verbesserte Basisstation;
der zweite Netzwerkknoten weist eine Multimedia Broadcast und Multicast Service-, MBMS-, oder Multicast/Broadcast Service-, MBS-, Fähigkeit auf;
der zweite Netzwerkknoten unterstützt die Übertragung von MBMS- oder MBS-Daten durch gemeinsame Zustellung im Kernnetzwerkabschnitt;
wobei, wenn der zweite Netzwerkknoten mindestens eines der Folgenden erfüllt, bestimmt wird, dass der zweite Netzwerkknoten die erste Fähigkeit nicht unterstützt:
der zweite Netzwerkknoten ist eine herkömmliche Basisstation;
der zweite Netzwerkknoten unterstützt nicht die Übertragung von MBMS- oder MBS-Daten durch gemeinsame Zustellung im Kernnetzwerkabschnitt, sondern unterstützt die Übertragung von MBMS- oder MBS-Daten separat durch eine Protokolldateneinheits-, PDU-, Sitzung oder durch individuelle Zustellung im Kernnetzwerkabschnitt.

7. Verfahren nach Anspruch 6, wobei die Rundfunkanzeige mindestens eine der Folgenden umfasst:
eine erste Rundfunkanzeige, die verwendet wird, um anzuzeigen, dass der zweite Netzwerkknoten Dienstinformationen oder Zustandsinformationen ausstrahlt; und
eine zweite Rundfunkanzeige, die verwendet wird, um anzuzeigen, dass der zweite Netzwerkknoten Planungsinformationen ausstrahlt.

8. Verfahren nach Anspruch 7, wobei in einem Fall, dass die Rundfunkanzeige die erste Rundfunkanzeige und die zweite Rundfunkanzeige umfasst, das Verfahren ferner Folgendes umfasst:
Durchführen einer ersten Operation und einer zweiten Operation; wobei
die erste Operation das Ausstrahlen der Dienstinformationen und/oder Zustandsinformationen über eine Luftschnittstelle umfasst; und
die zweite Operation mindestens eines der Folgenden umfasst:
Ausstrahlen der Planungsinformationen über eine Luftschnittstelle in einem Fall, dass eine Interessenanzeige empfangen wird; und
Senden einer Fehleranzeige an den ersten Netzwerkknoten in einem Fall, dass keine Interessenanzeige empfangen wird.

9. Verfahren nach Anspruch 6, wobei die ersten Daten mindestens eine der Folgenden umfassen:
eine Endgerätekennung;
eine Dienstkennung; und
eine Sitzungskennung.

10. Verfahren nach Anspruch 6, wobei das Verfahren nach dem Empfangen erster Daten, die von einem ersten Netzwerkknoten gesendet werden, ferner Folgendes umfasst:
Senden zweiter Daten auf Grundlage der ersten Daten über eine Luftschnittstelle;
wobei das Senden zweiter Daten an ein Endgerät auf Grundlage der ersten Daten über eine Luftschnittstelle mindestens eines der Folgenden umfasst:
Senden der zweiten Daten an das Endgerät auf Grundlage der ersten Funkrufanzeige in den ersten Daten;
Senden der zweiten Daten an das Endgerät auf Grundlage der Rundfunkanzeige in den ersten Daten; und
Senden der zweiten Daten an das Endgerät auf Grundlage der ersten empfangenen ersten Daten; und/oder
wobei die zweiten Daten mindestens eine der Folgenden umfassen:
eine zweite Funkrufanzeige; und
eine Rundfunknachricht;
wobei die Rundfunknachricht mindestens eine der Folgenden umfasst:
Planungsinformationen;
Dienstinformationen; und
Zustandsinformationen; und/oder
wobei der erste Netzwerkknoten mindestens eine der Folgenden ist:
eine erste Basisstation; und
eine Kernnetzwerkfunktion.

11. Verfahren nach einem der Ansprüche 6 bis 10, wobei der zweite Netzwerkknoten mindestens eine der Folgenden ist:
eine zweite Basisstation, die sich innerhalb eines Funkzugangsnetzwerk-basierten
Benachrichtigungsbereichs, RNA, befindet;
eine zweite Basisstation, die sich innerhalb eines Registrierungsbereichs, RA, befindet;
eine zweite Basisstation, die sich innerhalb eines Dienstbereichs befindet;
eine Basisstation in einem Verfolgungsbereich, die auf Grundlage einer Endgerätekennung bestimmt wird;
eine Basisstation einer vorherigen bedienenden Zelle, die auf Grundlage der Endgerätekennung bestimmt wird;
eine Basisstation einer benachbarten Zelle der vorherigen bedienenden Zelle, die auf Grundlage der Endgerätekennung bestimmt wird;
eine Nachbarbasisstation der Basisstation der vorherigen bedienenden Zelle, die auf Grundlage der Endgerätekennung bestimmt wird;
eine Basisstation einer empfohlenen Zelle, die auf Grundlage der Endgerätekennung bestimmt wird;
eine Basisstation, die auf Grundlage der Endgerätekennung bestimmt wird;
eine Basisstation einer Zelle, die Funkzugangsnetzwerk-Funkrufbereichsinformationen entspricht und die auf Grundlage der Endgerätekennung bestimmt wird; und
eine Basisstation, die einer RAN-Bereichkennung in einem Funkzugangsnetzwerk-Funkrufbereich entspricht, die auf Grundlage der Endgerätekennung bestimmt wird;
wobei der Funkzugangsnetzwerk-basierte Benachrichtigungsbereich und/oder der Registrierungsbereich auf Grundlage der Endgerätekennung bestimmt werden.

12. Netzwerkseitige Vorrichtung (800), umfassend einen Prozessor (804), einen Speicher (805) und ein Programm oder Anweisungen, die in dem Speicher (805) gespeichert sind und auf dem Prozessor (804) ablaufen können, **dadurch gekennzeichnet, dass**, wenn das Programm oder die Anweisungen durch den Prozessor (804) ausgeführt werden, die Schritte des Datenübertragungsverfahrens nach einem der Ansprüche 1 bis 11 implementiert werden.

13. Lesbares Speichermedium, wobei das lesbare Speichermedium ein Programm oder Anweisungen speichert, **dadurch gekennzeichnet, dass**, wenn das Programm oder die Anweisungen durch einen Prozessor ausgeführt werden, die Schritte des Datenübertragungsverfahrens nach einem der Ansprüche 1 bis 11 implementiert werden.

14. Computerprogrammprodukt, wobei das Computerprogrammprodukt in einem Speicher gespeichert ist, **dadurch gekennzeichnet, dass**, wenn das Computerprogrammprodukt durch einen Prozessor ausgeführt wird, die Schritte des Datenübertragungsverfahrens nach einem der Ansprüche 1 bis 11 implementiert werden.

## Revendications

1. Procédé de transmission de données exécuté par un premier nœud de réseau, **caractérisé en ce qu'**il comprend :
envoyer (S311) des premières données à un deuxième nœud de réseau selon que le deuxième nœud de réseau prend en charge ou non une première capacité ; dans lequel
les premières données comprennent au moins l'une des indications suivantes :
une première indication de radiomessagerie ;
une indication de diffusion ; et
une indication de radiomessagerie de groupe ;
dans lequel le premier nœud de réseau est au moins l'un des éléments suivants :
une première station de base ; et
une fonction de réseau central ;
lorsque le deuxième nœud de réseau répond à au moins l'une des conditions suivantes, il est déterminé que le deuxième nœud de réseau prend en charge la première capacité :
le deuxième nœud de réseau est une station de base améliorée ;
le deuxième nœud de réseau dispose d'une capacité de service de diffusion et de multidiffusion multimédia, MBMS, ou de service de multidiffusion/diffusion, MBS ;
le deuxième nœud de réseau prend en charge la transmission de données MBMS ou MBS via une distribution partagée dans la partie de réseau central ;
dans lequel, lorsque le deuxième nœud de réseau répond à au moins l'une des conditions suivantes, il est déterminé que le deuxième nœud de réseau ne prend pas en charge la première capacité :
le deuxième nœud de réseau est une station de base traditionnelle ;
le deuxième nœud de réseau ne prend pas en charge la transmission de données MBMS ou MBS via une distribution partagée dans la partie de réseau central, mais prend en charge la transmission de données MBMS ou MBS séparément via une session d'unité de données de protocole, PDU, ou via une distribution individuelle dans la partie de réseau central ;
dans lequel l'envoi (S311) des premières données au deuxième nœud de réseau, selon que le deuxième nœud de réseau prend en charge ou non une première capacité, comprend au moins l'une des opérations suivantes :
envoyer une indication de diffusion au deuxième nœud de réseau dans le cas où le deuxième nœud de réseau prend en charge la première capacité, dans lequel l'indication de diffusion est utilisée pour notifier au deuxième nœud de réseau d'envoyer un message de diffusion ; et
envoyer une première indication de radiomessagerie au deuxième nœud de réseau dans le cas où le deuxième nœud de réseau ne prend pas en charge la première capacité.

2. Procédé selon la revendication 1, dans lequel les premières données comprennent au moins l'un des identifiants suivants :
un identifiant de terminal ;
un identifiant de service ; et
un identifiant de session ; et/ou,
dans lequel le premier nœud de réseau est au moins l'un des éléments suivants :
une première station de base ; et
une fonction de réseau central.

3. Procédé selon la revendication 1, dans lequel le deuxième nœud de réseau est au moins l'une des stations de base suivantes :
une seconde station de base située à l'intérieur d'une zone de notification basée sur un réseau d'accès radio, RNA ;
une seconde station de base située à l'intérieur d'une zone d'enregistrement, RA ;
une seconde station de base située à l'intérieur d'une zone de service ;
une station de base dans une zone de suivi, déterminée sur la base d'un identifiant de terminal ;
une station de base d'une cellule de desserte précédente, déterminée sur la base de l'identifiant de terminal ;
une station de base d'une cellule voisine de la cellule de desserte précédente, déterminée sur la base de l'identifiant de terminal ;
une station de base voisine de la station de base de la cellule de desserte précédente, déterminée sur la base de l'identifiant de terminal ;
une station de base d'une cellule recommandée, déterminée sur la base de l'identifiant de terminal ;
une station de base déterminée sur la base de l'identifiant de terminal ;
une station de base d'une cellule correspondant à des informations de zone de radiomessagerie de réseau d'accès radio, déterminée sur la base de l'identifiant de terminal ; et
une station de base correspondant à un identifiant de zone RAN dans une zone de radiomessagerie de réseau d'accès radio, déterminée sur la base de l'identifiant de terminal.

4. Procédé selon la revendication 3, dans lequel la zone de notification basée sur le réseau d'accès radio et/ou la zone d'enregistrement sont déterminées sur la base de l'identifiant de terminal.

5. Procédé selon la revendication 1, dans lequel l'indication de diffusion comprend au moins l'une des indications suivantes :
une première indication de diffusion, utilisée pour indiquer que le deuxième nœud de réseau diffuse des informations de service ou des informations d'état ; et
une seconde indication de diffusion, utilisée pour indiquer que le deuxième nœud de réseau diffuse des informations de planification ;
dans lequel, dans le cas où l'indication de diffusion comprend la seconde indication de diffusion, le procédé comprend en outre :
envoyer l'indication de diffusion à un troisième nœud de réseau dans le cas où une indication de défaillance envoyée par le deuxième nœud de réseau est reçue.

6. Procédé de transmission de données exécuté par un deuxième nœud de réseau, **caractérisé en ce que** le procédé comprend :
recevoir (S410, S510) des premières données envoyées par un premier nœud de réseau ; dans lequel
les premières données comprennent au moins l'une des indications suivantes :
une première indication de radiomessagerie ;
une indication de diffusion ; et
une indication de radiomessagerie de groupe ;
dans lequel le premier nœud de réseau est au moins l'un des éléments suivants :
une première station de base ; et
une fonction de réseau central ;
après la réception des premières données envoyées par un premier nœud de réseau, le procédé comprend en outre au moins l'une des opérations suivantes :
sauter l'envoi des secondes données à un terminal dans le cas où le deuxième nœud de réseau ne prend pas en charge une première capacité et où les premières données sont une indication de diffusion ;
envoyer les secondes données au terminal dans le cas où le deuxième nœud de réseau ne prend pas en charge la première capacité et où les premières données sont une première indication de radiomessagerie ;
envoyer les secondes données au terminal dans le cas où le deuxième nœud de réseau prend en charge la première capacité et où les premières données sont une indication de diffusion ;
dans lequel, lorsque le deuxième nœud de réseau répond à au moins l'une des conditions suivantes, il est déterminé que le deuxième nœud de réseau prend en charge la première capacité :
le deuxième nœud de réseau est une station de base améliorée ;
le deuxième nœud de réseau dispose d'une capacité de service de diffusion et de multidiffusion multimédia, MBMS, ou de service de multidiffusion/diffusion, MBS ;
le deuxième nœud de réseau prend en charge la transmission de données MBMS ou MBS via une distribution partagée dans la partie de réseau central ;
dans lequel, lorsque le deuxième nœud de réseau répond à au moins l'une des conditions suivantes, il est déterminé que le deuxième nœud de réseau ne prend pas en charge la première capacité :
le deuxième nœud de réseau est une station de base traditionnelle ;
le deuxième nœud de réseau ne prend pas en charge la transmission de données MBMS ou MBS via une distribution partagée dans la partie de réseau central, mais prend en charge la transmission de données MBMS ou MBS séparément via une session d'unité de données de protocole, PDU, ou via une distribution individuelle dans la partie de réseau central.

7. Procédé selon la revendication 6, dans lequel l'indication de diffusion comprend au moins l'une des indications suivantes :
une première indication de diffusion, utilisée pour indiquer que le deuxième nœud de réseau diffuse des informations de service ou des informations d'état ; et
une seconde indication de diffusion, utilisée pour indiquer que le deuxième nœud de réseau diffuse des informations de planification.

8. Procédé selon la revendication 7, dans lequel, dans le cas où l'indication de diffusion comprend la première indication de diffusion et la seconde indication de diffusion, le procédé comprend en outre :
effectuer une première opération et une seconde opération ; dans lequel
la première opération comprend la diffusion des informations de service et/ou des informations d'état via une interface radio ; et
la seconde opération comprend au moins l'une des opérations suivantes :
diffuser les informations de planification via une interface radio dans le cas où une indication d'intérêt est reçue ; et
envoyer une indication de défaillance au premier nœud de réseau dans le cas où aucune indication d'intérêt n'est reçue.

9. Procédé selon la revendication 6, dans lequel les premières données comprennent au moins l'un des identifiants suivants :
un identifiant de terminal ;
un identifiant de service ; et
un identifiant de session.

10. Procédé selon la revendication 6, dans lequel, après la réception de premières données envoyées par un premier nœud de réseau, le procédé comprend en outre :
envoyer des secondes données sur la base des premières données via une interface radio ;
dans lequel l'envoi de secondes données à un terminal sur la base des premières données via une interface radio comprend au moins l'une des opérations suivantes :
envoyer les secondes données au terminal sur la base de la première indication de radiomessagerie dans les premières données ;
envoyer les secondes données au terminal sur la base de l'indication de diffusion dans les premières données ; et
envoyer les secondes données au terminal sur la base des premières données reçues ; et/ou,
dans lequel les secondes données comprennent au moins l'un des éléments suivants :
une seconde indication de radiomessagerie ; et
un message de diffusion ;
dans lequel le message de diffusion comprend au moins l'une des informations suivantes :
des informations de planification ;
des informations de service ; et
des informations d'état ; et/ou,
dans lequel le premier nœud de réseau est au moins l'un des éléments suivants :
une première station de base ; et
une fonction de réseau central.

11. Procédé selon l'une quelconque des revendications 6 à 10, dans lequel le deuxième nœud de réseau est au moins l'une des stations de base suivantes :
une seconde station de base située à l'intérieur d'une zone de notification basée sur un réseau d'accès radio, RNA ;
une seconde station de base située à l'intérieur d'une zone d'enregistrement, RA ;
une seconde station de base située à l'intérieur d'une zone de service ;
une station de base dans une zone de suivi, déterminée sur la base d'un identifiant de terminal ;
une station de base d'une cellule de desserte précédente, déterminée sur la base de l'identifiant de terminal ;
une station de base d'une cellule voisine de la cellule de desserte précédente, déterminée sur la base de l'identifiant de terminal ;
une station de base voisine de la station de base de la cellule de desserte précédente, déterminée sur la base de l'identifiant de terminal ;
une station de base d'une cellule recommandée, déterminée sur la base de l'identifiant de terminal ;
une station de base déterminée sur la base de l'identifiant de terminal ;
une station de base d'une cellule correspondant à des informations de zone de radiomessagerie de réseau d'accès radio, déterminée sur la base de l'identifiant de terminal ; et
une station de base correspondant à un identifiant de zone RAN dans une zone de radiomessagerie de réseau d'accès radio, déterminée sur la base de l'identifiant de terminal ;
dans lequel la zone de notification basée sur le réseau d'accès radio et/ou la zone d'enregistrement sont déterminées sur la base de l'identifiant de terminal.

12. Dispositif côté réseau (800), comprenant un processeur (804), une mémoire (805) et un programme ou des instructions stockés dans la mémoire (805) et pouvant être exécutés sur le processeur (804), **caractérisé en ce que**, lorsque le programme ou les instructions sont exécutés par le processeur (804), les étapes du procédé de transmission de données selon l'une quelconque des revendications 1 à 11 sont mises en œuvre.

13. Support de stockage lisible, dans lequel ledit support de stockage lisible stocke un programme ou des instructions, **caractérisé en ce que**, lorsque le programme ou les instructions sont exécutés par un processeur, les étapes du procédé de transmission de données selon l'une quelconque des revendications 1 à 11 sont mises en œuvre.

14. Produit de programme informatique, dans lequel le produit de programme informatique est stocké dans une mémoire, **caractérisé en ce que**, lorsque ledit produit de programme informatique est exécuté par un processeur, les étapes du procédé de transmission de données selon l'une quelconque des revendications 1 à 11 sont mises en œuvre.
